# EUROPEAN PATENT APPLICATION

(11) **EP 4 624 308 A1**
(43) Date of publication of application: **01.10.2025**
(21) Application number: 25165233.5
(22) Date of filing: 21.03.2025
(51) Int. Cl.: B62B 9/26

(54) **MULTI-MODAL SELECTIVELY DETACHABLE STROLLER STORAGE**

(30) Priority: 26.03.2024 US 202463570016 P; 11.03.2025 US 202519076631
(71) Applicant: Chuah, Khai Gan, Austin, TX 78748 (US)
(72) Inventor: Chuah, Khai Gan, Austin, TX 78748 (US)
(74) Representative: Budde Schou A/S

(57) **Abstract**

There is provided a stroller (10) configured to selectively operate between a shelf mode and a container mode. In an illustrative example, a frame (15) of the stroller supports a seating module, and supports a shelf (40) disposed at least partially over a footprint (70) defined by multiple wheels of the stroller. In a shelf mode, items may, for example, be supported by the shelf (40) in a storage space over the footprint and at least partially under the seating module. In a container mode, a selected container (30) may, for example, be releasably coupled (e.g., by a latching mechanism) to the stroller frame (15) such that it extends into the storage space. Various embodiments may, for example, advantageously enable use of a preferred container style and/or shape while still enabling secure coupling of the container under the seating module.

## Description

### BACKGROUND

Various types of strollers may, for example, accommodate diverse needs of parents and/or caregivers. For instance, a standard stroller may be designed for everyday use. An umbrella stroller may, for example, be lightweight and easy to fold. A jogging stroller may, for example, be built for outdoor activities and running.

Different types of containers serve various purposes in everyday life. A plastic container may, for example, be used for food storage. A metal container may, for example, be utilized for industrial applications. A glass container may, for example, be used to store beverages and/or preserves. A cardboard container may, for example, be employed for shipping and/or packaging. A ceramic container may, for example, be used for decorative and/or cooking purposes.

Strollers may, for example, offer multiple practical applications in the daily life of parents and/or caregivers. A stroller may, for example, provide a convenient of transporting infants and/or toddlers. A stroller may, for example, be used for shopping trips. A stroller may, for example, serve as a mobile bed for children during outdoor excursions. A stroller may, for example, act as a temporary high chair for feeding in public places. A stroller may, for example, enable parents to engage in physical activities, such as jogging, with their child in tow.

### TECHNICAL FIELD

Apparatus and methods generally relate to strollers.

### BRIEF SUMMARY

Apparatus and related methods generally relate to a stroller configured to selectively operate between a shelf mode and a container mode. In an illustrative example, a frame of the stroller supports a seating module, and supports a shelf disposed at least partially over a footprint defined by multiple wheels of the stroller. In a shelf mode, items may, for example, be supported by the shelf in a storage space over the footprint and at least partially under the seating module. In a container mode, a selected container may, for example, be releasably coupled (e.g., by a latching mechanism) to the stroller frame such that it extends into the storage space. Various embodiments may, for example, advantageously enable use of a preferred container style and/or shape while still enabling secure coupling of the container under the seating module.

### BRIEF DESCRIPTION OF THE DRAWINGS

Various embodiments of the present embodiments are described with reference to the following FIGURES.
FIG. 1 illustrates a stroller equipped with a detachable storage unit in a shelf mode.
FIG. 2 depicts the detachable storage unit in a container mode, detached from the stroller.
FIG. 3 depicts an embodiment with a track.
FIG. 4 depicts an embodiment with a hollow track.
FIG. 5 depicts an embodiment with a latch configured to releasably secure the container to the stroller.
FIG. 6 depicts an embodiment with an inset latch.

Like reference numerals refer to like parts throughout the various views unless otherwise specified. Embodiments and portions of embodiments illustrated and described herein are nonlimiting and non-exhaustive.

### DETAILED DESCRIPTION

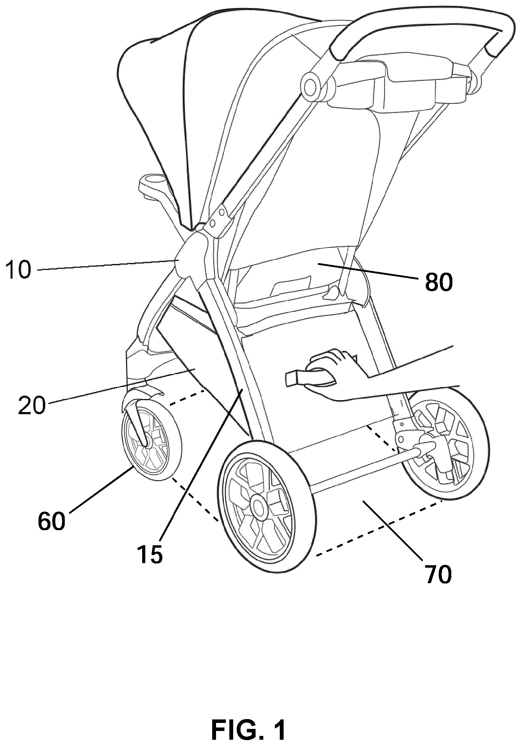

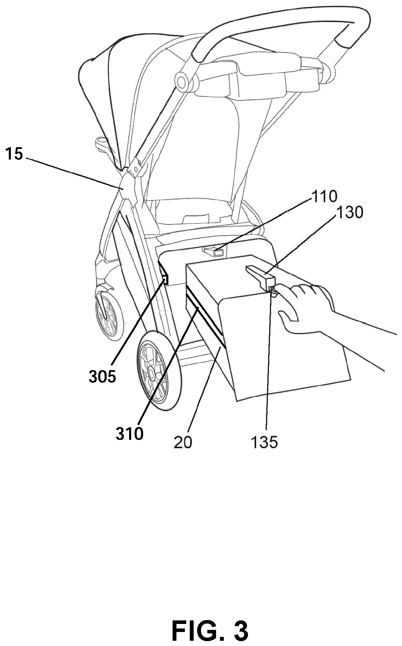

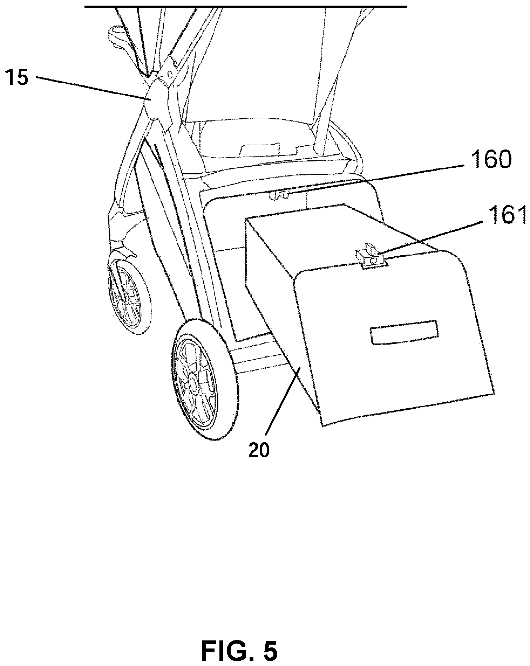

In order to assist rapid comprehension, this document introduces a stroller with selectively detachable container in FIGS. 1-2. The discussion turns to embodiments of container tracks with reference to FIG. 3-4. Then, example container latches are disclosed with respect to FIGS. 5-6. Finally, various additional embodiments and/or features are discussed related to strollers.

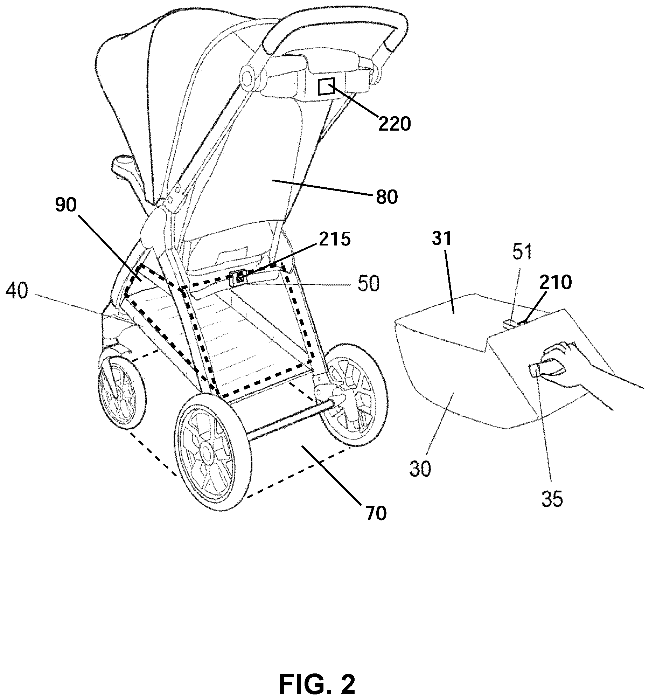

FIG. 1 and FIG. 2 illustrate a stroller 10 equipped with a detachable storage unit 20 (e.g., a container). The stroller 10 includes a stroller frame 15. The stroller frame 15 supports a seating module 80. The stroller frame 15 is coupled to multiple wheels 60 (in this example, 4 wheels are depicted, some embodiments may include 2, 3, 4, or more). The wheels define a footprint 70. A receptacle 40 (e.g., shelf) is supported by the stroller frame 15. A storage area 90 is disposed between the seating module 80 and the receptacle 40.

In the depicted example, the storage unit 20 includes a storage section 30. The receptacle 40 may, for example, be configured to store items (e.g., bags, groceries, supplies). The receptacle 40 may, for example, be configured as a base configured to receive the storage unit 20. The receptacle 40 may, for example, advantageously provide a stable base supporting the detachable storage unit 20. The stroller's frame 15 may, for example, be specifically designed to accommodate and securely hold the storage section 30 in position. As shown in FIGS. 1-2, the stroller 10 may, for example, be selectively operated between a shelf mode (e.g., as shown in FIG. 2) and a container mode (e.g., as shown in FIG. 1).

As depicted, in the container mode, the storage unit 20 is selectively fastened such that it extends into the storage area 90 over the footprint 70. A container that extends into the storage area 90 over the footprint 70, beneath the seating module 80, and supported by the receptacle 40 may, for example, advantageously enable multi-modal use of space around the seating module 80. For example, the shelf may advantageously provide storage for items without a container. The shelf may, for example, advantageously support the container (e.g., which may advantageously reduce a need for specialized hardware and/or a specialized container). The container may, for example, advantageously enable more effective use of storage (e.g., for loose and/or small items). Various shaped containers may, for example, advantageously be supported by the shelf and/or releasably secured at least partially under the seating module 80 and between the wheels 60 (e.g., between members of the frame 15). For example, various embodiments may advantageously provide a modular, customizable storage solution. Embodiments may, for example, advantageously provide a detachable and/or modular compartmentalized storage transforming traditional strollers and/or containers. Various embodiments may, for example, advantageously make management of baby essentials and/or personal items more accessible and/or less cumbersome. A removable shelf may, for example, enable access, organization, and/or management of contents without a need to bend or squat (e.g., allowing organization on a surface such as a tabletop before stowage under the stroller). The shelf and removable container may, for example, advantageously cooperate to enable use of a preferred container style and/or shape while still enabling secure coupling of the container under the seating module.

The storage unit 20 (e.g., storage section 30, the entire storage unit 20) may, for example, be configured in various forms. For example, in some embodiments the storage section 30 may be configured as a wire basket. A wire basket may, for example, advantageously provide a lightweight construction. A wire basket configuration may, for example, advantageously allows airflow to stored items.

The storage unit 20 may be configured as a solid container, such as with rigid walls. A solid (e.g., rigid walled) container may, for example, provide maximum protection of items within the storage unit 20. A solid container advantageously provides impact protection.

In some embodiments, the storage section 30 may, for example, include a crushable material (e.g., fabric). The storage section 30 may, for example, be configured to withstand compression, and then return to its original shape. The storage section 30 may, for example, be crushable. The crushable section may, for example, advantageously enable compact storage (e.g., during folding of the stroller 10).

The storage unit 20 may, for example, be configured as a fabric tote. The fabric tote may, for example, advantageously provide collapsible storage. A fabric tote advantageously enables compact storage when not in use.

The storage unit 20 may, for example, be configured as a compartmentalized container. The container may, for example, include dividers. The compartmentalized storage and/or dividers may, for example, advantageously provide organized storage. Compartmentalized storage advantageously keeps items separated and organized.

The storage unit 20 may, for example, include a lid 31 (e.g., removable, rollable). The lid may, for example, advantageously retain loose items and/or provide weather protection of contents.

In some embodiments, the storage section 30 may include various handle configurations. The storage section 30 may, for example, include a single top handle. For example, FIG. 2 depicts a handle 35. The single top hand may, for example, advantageously provide easy lifting. In some embodiments, multiple handles may, for example, be included. Multiple handles may, for example, advantageously enable different carrying positions. The storage section may, for example, include side handles. Side handles may, for example, provide balanced carrying. The storage section may include a shoulder strap. The shoulder strap may, for example, advantageously enable hands-free transport. The storage section may, for example, include retractable handles. The retractable handles may, for example, be configured to store flush against the container. Retractable handles may, for example, advantageously reduce bulk when not in use. The storage section may, for example, include rigid plastic handles. Rigid handles may, for example, advantageously provide durability. The storage section may include soft fabric handles. Rigid handles may, for example, advantageously provide secure gripping points. Fabric handles may, for example, advantageously provide comfort.

In some embodiments, the stroller 10 and/or the storage unit 20 includes a latching mechanism. As depicted in FIG. 2, an example latching mechanism includes a latch member 51 configured to releasably couple inside a latch receiver 50.

For example, the latching mechanism may include one or more latches. In some embodiments, one or more latches may be disposed on the stroller 10 (e.g., the stroller frame 15). In some embodiments, one or more latches may be disposed on the receptacle 40. In some embodiments, one or more latches may be disposed on the storage unit 20. A latching mechanism(s) may, by way of example and not limitation, advantageously retain the storage unit 20 even during navigation (e.g., over rough terrain).

For example, in some embodiments such as depicted in FIG. 2, the storage section 30 securely attaches using one or more of the latches. The storage section may, for example, attach using snap latches for quick connection. Snap latches may, for example, advantageously enable one-handed operation.

The storage section may, for example, attach using hook latches. For example, hook latches may advantageously provide secure engagement. Hook latches may, for example, advantageously prevent accidental release.

The storage section may, for example, attach using magnetic latches. Magnetic latches may, for example, advantageously provide for easy alignment. Magnetic latches may, for example, advantageously guide proper alignment.

The storage section may, for example, attach using strap latches. Strap latches may, for example, advantageously provide adjustable tension.

In some embodiments, the storage section may attach using multiple latches. Multiple latches may, for example, advantageously provide enhanced security. Multiple latches may, for example, advantageously distribute securing forces.

Latches may, for example, be positioned in different locations. Latch(es) may, for example, be mounted on the stroller frame. Mounting on the stroller frame may, for example, advantageously enable direct engagement. Frame-mounted latches may, for example, advantageously provide stable attachment points.

Latch(es) may, for example, be integrated into the container. Container integrated latches may, for example, advantageously enable self-contained operation. Container-mounted latches may for example, advantageously enable pre-aligned engagement.

Latch(es) may, for example, be incorporated into the shelf. Shelf-mounted latches may, for example, advantageously provide simplified alignment. Shelf-mounted latches may, for example, advantageously simplify container insertion.

In some embodiments, such as depicted in FIG. 2, the stroller 10 and/or the storage unit 20 may be equipped with one or more sensors. For example, include a sensor module 210. In this example, the sensor module 210 is configured to operably couple to a control module 220. For example, the sensor module 210 may be electrically coupled to the control module 220 via communication channels 215. The sensor system may, for example, advantageously enable automated detection of container engagement status.

FIG. 3 illustrates a storage unit 20 being operated between the storage mode and the container mode. In this example, rails 305 and rails 310 are provided on the stroller frame 15 and the storage unit 20. For example, the storage unit 20 may be secured underneath the stroller 10 using different mounting configurations. The storage unit may, for example, slide in from the rear using alignment rails. Side insertion may, for example, advantageously enable access in tight spaces. The unit may insert from the rear using track guides. Rear insertion may, for example, advantageously allows full-width containers. In some embodiments, the storage unit 20 may, for example, dropped in from a top using vertical guides. Top insertion may, for example, advantageously simplify alignment. The storage unit 20 may rest, for example, on drawer slides (e.g., rails 305, rails 310) for smooth operation. Drawer slides may, for example, advantageously provide smooth operation.

FIG. 3 illustrates an embodiment in which the storage unit 20 is configured to be securely positioned underneath the stroller 10 using a track system referred to as the track component 110. The track component 110 is situated beneath the child seat portion (seating module 80) of the stroller 10. The track component 110 is configured to facilitate the sliding movement of the storage unit along it. The storage unit 20 includes a sliding component 130 that engages with the track component 110. The track component 110 and the sliding component 130 are configured as a latching mechanism such that the storage unit 20 is releasably locked in place (e.g., in the container mode in the storage area 90) via secure component 135.

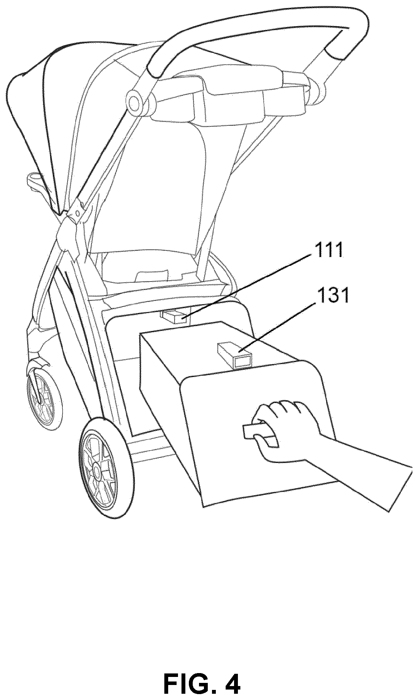

FIG. 4 depicts a design with a track component 111. The track component may, as depicted, include a protruding part without an opening end. A sliding component 131 may, as depicted, be provided with a hollow shape with an open end configured to accommodate the track component 111 sliding through it. The mating track component 111 and sliding component 131 may, for example, advantageously guide the storage unit 20 into a predetermined relationship (e.g., along a predetermined path) extending into the storage area 90.

FIG. 5 shows a storage unit configured to be secured underneath the stroller 10 by engaging secure components 160 (e.g., latch mechanism) from the stroller with the secure component 161 (e.g., latch mechanism) of the storage unit 20. Such embodiments may, for example, advantageously enable users to easily attach and/or detach the storage unit's secure component. In this example, the storage area 90.

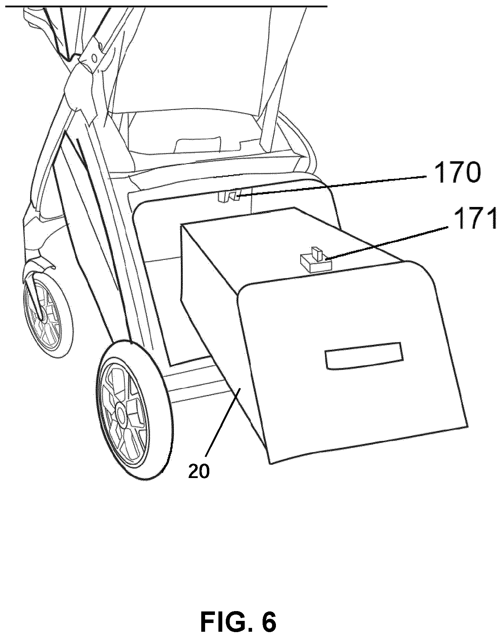

FIG. 6 depicts an embodiment involving a secure component 170 (e.g., latch mechanism) from the stroller and the secure component 171 (e.g., latch mechanism) of the storage unit 20, demonstrating the versatility in the design of these components.

In some embodiments, a shelf (e.g., receptacle 40) can be configured in various forms. The shelf may, for example, include a flat solid surface. The flat solid surface may, for example, advantageously provide support for small items. In some embodiments, the shelf may, for example, include a wire grid. The wire grid may, for example, advantageously provide lightweight construction and/or air flow. In some embodiments, the shelf may, for example, be contoured to cradle the container. In some examples, the shelf may, for example, include multiple levels. The multiple levels may, for example, advantageously enable organized storage and/or simultaneous storage on a portion of the shelf even during a container mode. Multiple levels may, for example, advantageously enable separated storage zones. A shelf may, for example, include raised edges. Raised edges may, for example, advantageously prevent items from falling. Raised edges may, for example, advantageously contain loose items. A shelf may, for example, be constructed of flexible fabric. The flexible fabric may, for example, advantageously enable the shelf to be folded with the stroller.

The stroller frame can be configured to collapse in different ways. The frame may fold front-to-back for compact storage. The frame may collapse side-to-side for narrow storage. The frame may telescope for adjustable length. The frame may use a combination of hinges and slides for multi-directional folding. Front-to-back folding advantageously enables one-handed operation. Side-to-side folding advantageously produces a narrow folded profile. Telescoping advantageously allows custom size adjustment.

In some embodiments, the stroller 10 may be configured, for example, to fold. For example, the stroller frame 15 may, be foldable. In some embodiments, a shelf (e.g., receptacle 40) may, for example, be designed to accommodate the frame collapsing in one or more ways. In some embodiments, the shelf may, for example, fold along with the frame (e.g., using hinges). Hinged shelves may, for example, advantageously maintain alignment during collapse. The shelf may, for example, slide relative to the frame during collapse. Sliding shelves may, for example, advantageously enable compact folding. The shelf may, for example, be made of flexible fabric that folds. Fabric shelves may, for example, advantageously eliminate rigid components. In some embodiments, the shelf may, for example, be supported by collapsible struts. In some embodiments, the shelf may, for example, telescope with the frame.

In some embodiments, a container (e.g., storage unit 20) may be configured to fold (e.g., during collapse). The container may, for example, be made of flexible fabric (e.g., that self-collapses when the stroller frame 15 is collapsed). Fabric containers may, for example, advantageously conform to available space. The container may, for example, include hinged sides (e.g., configured to fold flat). Hinged containers may, for example, advantageously maintain shape when expanded. The container may, for example, have telescoping walls that compress. The container may, for example, be supported by collapsible struts. Telescoping containers may, for example, advantageously provide adjustable capacity. The container may, for example, include accordion-style pleats configured, for example, to advantageously enable controlled collapse of the container.

The stroller may include various seat configurations. The stroller may, for example, include a single seat (e.g., fixed). The stroller may, for example, include multiple seats (e.g., advantageously enabling carrying of siblings). Multiple seats may, for example, advantageously accommodate more children. The stroller may, for example, accept a removable car seat. A removable seat may, for example, advantageously enable travel system functionality. Removable seats may, for example, advantageously enable multiple use modes. The seats may, for example, include rigid material (e.g., plastic). A rigid seat may, for example, advantageously provide a durable construction. The seats may, for example, include fabric. The fabric may, for example, advantageously provide comfort for the seated person. Fabric seats may, for example, advantageously provide comfort while reducing weight. In some embodiments, the seats may, for example, be adjustable (e.g., advantageously enabling different positions and/or configurations).

In an illustrative aspect, a stroller may include: a stroller frame having a seating module and three or more wheels, a storage area extending beneath the seating module and at least partially bounded underneath by a shelf extending into a space over a footprint between the three or more wheels. The storage area may, for example, be configured to: in a shelf mode, receive items supported by the shelf, and in a container mode, receive a container supported by the shelf and extending beneath the seating module and into the space, wherein the container is selectively fastened into the storage area by a latching mechanism comprising a latch configured to releasably couple the container to the stroller frame. The container may include, for example, a handle such that the container is configured to be carried by at least one hand of a human.

In an illustrative aspect, a stroller may include, for example: a stroller frame having a seating module and three or more wheels, a storage area extending beneath the seating module and at least partially bounded underneath by a shelf extending into a space over a footprint between the three or more wheels. The storage area may, for example, be configured to: in a shelf mode, receive items supported by the shelf, and in a container mode, receive a container supported by the shelf and extending beneath the seating module and into the space, wherein the container is selectively fastened into the storage area by a latching mechanism comprising a latch configured to releasably couple the container to the stroller frame. In an example, the container may include, for example, a basket. In a second example, which may include the first example, the container may include, for example, a lid. In a third example, which may include one or both of the first and second examples, the latch is disposed on the container. In a fourth example, which may include one or more or each of the first through third examples, the latch is disposed on the stroller frame. In a fifth example, which may include, for example, one or more or each of the first through fourth examples, the latch is disposed on the shelf. In a sixth example, which may include, for example, one or more or each of the first through fifth examples, the shelf includes a solid shelf. In a seventh example, which may include, for example, one or more or each of the first through sixth examples, the shelf includes a wire shelf. In an eighth example of the system, which may include, for example, one or more or each of the first through seventh examples, the shelf includes multiple levels. In a ninth example of the system, which may include, for example, one or more or each of the first through eighth examples, the container is configured to load from a side of the stroller. In a tenth example, which may include, for example, one or more or each of the first through ninth examples, the container is configured to load from a front of the stroller. In an eleventh example, which may include, for example, one or more or each of the first through tenth examples, the container is configured to load from a rear of the stroller. In a twelfth example, which may include, for example, one or more or each of the first through eleventh examples, the stroller frame is selectively operable into a collapsed mode. In a thirteenth example, which may include, for example, one or more or each of the first through twelfth examples, the shelf is configured to slide relative to the stroller frame when the stroller is operated into the collapsed mode. In a fourteenth example, which may include, for example, one or more or each of the first through thirteenth examples, the system further includes: a track configured to guide the container along a predetermined path when the container is operated between the container mode and the shelf mode. In a fifteenth example, which may include, for example, one or more or each of the first through fourteenth examples, the container includes a handle such that the container is configured to be carried by at least one hand of a human. In a sixteenth example, which may include, for example, one or more or each of the first through fifteenth examples, the stroller frame includes four wheels.

It will be understood that various modifications can be made within the scope of this disclosure. For example, one or more advantageously results may be achieved if components are removed, added, multiplied, scaled, and/or rearranged, and/or if steps in a method are omitted, added, repeated, and/or performed in a different order. Therefore, other implementations are contemplated within the scope of the following claims.

## Claims

1. A stroller (10) comprising:
a stroller frame (15) having a seating module (80) and at least three wheels (60);
a storage area (90) extending beneath the seating module and at least partially bounded underneath by a shelf (40) extending into a space over a footprint (70) between the at least three wheels;
wherein the storage area is configured to:
in a shelf mode, receive items supported by the shelf, and
in a container mode, receive a container (30) supported by the shelf and extending beneath the seating module and into the space,
wherein the container is selectively fastened into the storage area by a latching mechanism comprising a latch configured to releasably couple the container to the stroller frame.

2. The stroller of claim 1, wherein the container comprises a basket and/or a lid (31).

3. The stroller of any one of claims 1-2, wherein the latch is disposed on the container, the stroller frame, and/or the shelf.

4. The stroller of any one of claims claim 1-3, wherein the shelf comprises a solid shelf, a wire shelf, and/or multiple levels.

5. The stroller of any one of claims 1-4, wherein the container is configured to load from a side of the stroller.

6. The stroller of any one of claims 1-5, wherein the container is configured to load from a front of the stroller.

7. The stroller of any one of claims 1-6, wherein the container is configured to load from a rear of the stroller.

8. The stroller of any one of claims 1-7, wherein the stroller frame is selectively operable into a collapsed mode.

9. The stroller of claim 8, wherein the shelf is configured to slide relative to the stroller frame when the stroller is operated into the collapsed mode.

10. The stroller of any one of claims 1-9, further comprising a track configured to guide the container along a predetermined path when the container is operated between the container mode and the shelf mode.

11. The stroller of any one of claims 1-10, wherein the container comprises a handle (35) such that the container is configured to be carried by at least one hand of a human.

12. The stroller of any one of claims 1-11, wherein the stroller frame includes four wheels.

13. The stroller of any one of claims 1-12, wherein the shelf is disposed above at least one of the at least three wheels.

14. A stroller (10) comprising:
a stroller frame (15) having a seating module (80) and at least three wheels (60);
a storage area (90) extending beneath the seating module (80) and at least partially bounded by a means for storage (40) configured to selectively receive one or both of:
items directly supported by the means for storing; and
a container (30) supported by the means for storage and extending beneath the seating module and the means for storage, wherein the container is selectively fastened to the stroller frame.

15. The stroller of claim 14, wherein the container comprises a handle (35) such that the container is configured to be carried by at least one hand of a human.
